# EUROPEAN PATENT APPLICATION

(11) **EP 1 598 914 A1**
(43) Date of publication of application: **23.11.2005**
(21) Application number: 04101790.6
(22) Date of filing: 28.04.2004
(51) Int. Cl.: H02J 7/00

(54) **Battery preserving device and battery pack comprising such a device**

(71) Applicant: Sony Ericsson Mobile Communications AB, 221 88 Lund (SE)
(72) Inventor: Kalogeropoulos, Sarandis, 216 21, Malmo (SE); Mellblom, Tomas, 212 14, Malmo (SE); Wolf, Mats, 247 35, Sodra Sandby (SE); Svensson, Jan-Olof, 261 63, Glumslov (SE); L'Estrade, Christian, 252 49, Helsingborg (SE)
(74) Representative: Akerman, Marten Lennart

(57) **Abstract**

The invention relates to a battery preserving device, particularly in connection with a battery pack (1) to be used with a portable apparatus (4). The battery preserving device provides an electronic function (5) to switch off all current consumption from the battery cell (3), especially from a safety circuit (2), when the battery pack is stored or not used in the apparatus. The invention also relates to apparatus to be powered by or connected to such a device and battery pack comprising such a device. Preferably, the function is added to the existing safety switch using the transistor switches (6B, 6C) thereof.

## Description

### Field of the invention

The present invention relates to a battery preserving device, particularly in connection with a battery pack to be used with a portable apparatus. The battery preserving device has the capability to switch off all current consumption from the associated battery cell, especially from a safety circuit, when the battery pack is stored or not used in the apparatus. The invention also relates to an apparatus to be powered by or connected to such a battery pack and a battery pack comprising such a device. The invention results in prolonged shelf life of the battery pack.

### State of the art

A battery pack for portable apparatuses, such as mobile phones, usually contains electronics such as a safety circuit, MOSFET transistors, communication ASIC etc in addition to the battery cell itself. These components will consume power from the battery cell, even when it is stored on the shelf. Even if some of the circuits go into a "high sleep mode" there still is a small current consumption e.g. 500 nA. Consequently, the shelf life is significantly reduced.

For example, a mobile telephone/notebook/PDA company produces a lot of battery packs and they may be stored for a very long time due to different reasons. Suddenly they are to be used, but the capacity may be too low due to the current consumption of the battery pack itself. Also, a customer may buy two battery packs for his device. One battery pack is on the shelf while he is using the other one. The one that is on the shelf will loose capacity after a long time and is not ready to be used when the customer wishes to switch battery. Another example is that after some years a customer will need a new battery for his device. The battery pack that the customer gets would have been on the shelf for a long time, which could result in that the battery performance has decreased.

It is possible to arrange a mechanical on-off switch on the battery pack to switch off the current consumption. However, the mechanical switch would add costs to the battery pack and a built-in electronic solution would be preferable, because it is easier to activate and can be controlled automatically.

### Summary of the invention

The object of the invention is to provide an electronic function to switch off all current consumption from the battery cell. Preferably, the function is added to the existing safety switch using the transistor switches thereof to shut off the current consumption.

In a first aspect the invention provides a device for preserving battery capacity adapted to be connected to or integrated with a safety circuit connected to output poles of a battery cell and comprising a switchable element arranged to disconnect the battery cell, the battery cell being suitable for connection to an apparatus.

According to the invention the device further comprises a disconnection control means adapted to command the switchable element to disconnect substantially all current consumption from the battery cell including the safety circuit when certain criteria are fulfilled.

Preferably, the disconnection control means is adapted to receive a disconnection signal commanding the disconnection control means to command a disconnection.

In one embodiment, the disconnection control means further comprises an activity detection means adapted to detect if the battery cell is connected to or disconnected from an apparatus.

Also, the disconnection control means may further comprise a timing means adapted to measure the time t elapsed since the battery cell was disconnected from the apparatus, wherein the disconnection control means is adapted to command a disconnection when the time t elapsed is greater than a time limit tₘₐₓ (t>tₘₐₓ).

In another embodiment, the disconnection control means further comprises a detection means adapted to sense a parameter of the battery cell, wherein the disconnection control means is adapted to command a disconnection when a logical expression involving the parameter fulfils a certain criterion.

Suitably, the parameter detection means comprises a voltage detection means adapted to sense the voltage U of the battery cell, wherein the disconnection control means is adapted to command a disconnection when the battery cell is disconnected from an apparatus and the voltage U is less than a voltage preserve limit Uₚᵣₑₛₑᵣᵥₑ (U<Uₚᵣₑₛₑᵣᵥₑ).

For example, Uₚᵣₑₛₑᵣᵥₑ is approximately 70 - 80% of the maximum battery cell voltage.

In another embodiment, the parameter detection means comprises a capacity detection means adapted to sense the remaining capacity E of the battery cell, wherein the disconnection control means is adapted to command a disconnection when the battery cell is disconnected from an apparatus and the remaining capacity E is less than a capacity preserve limit Eₚᵣₑₛₑᵣᵥₑ (E<Eₚᵣₑₛₑᵣᵥₑ).

For example, Eₚᵣₑₛₑᵣᵥₑ is approximately 10 - 40% of the maximum battery cell capacity.

In one embodiment, the parameter detection means comprises a voltage detection means adapted to sense the voltage U of the battery cell, wherein the disconnection control means is adapted to command a disconnection when the voltage U is less than a low voltage limit U_{low} (U<U_{low}).

Preferably, the safety circuit is arranged to switch off an apparatus connected to the battery cell when the voltage U of the battery cell is lower than a limit U_{z}, and U_{low} is lower than said voltage limit U_{z}.

For example, U_{low} is approximately 60% of the maximum battery cell voltage.

In another embodiment, the parameter detection means comprises a capacity detection means adapted to sense the remaining capacity E of the battery cell, wherein the disconnection control means is adapted to command a disconnection when the remaining capacity E is less than a capacity limit E_{low} (E<E_{low}).

Preferably, the safety circuit is arranged to switch off an apparatus connected to the battery cell when the remaining capacity E of the battery cell is lower than a limit E_{z}, and E_{low} is lower than said capacity limit E_{z}.

For example, E_{low} is approximately 10% of the maximum battery cell capacity.

Preferably, the disconnection control means is adapted to command the switchable element to connect all circuits including the safety circuit upon reception of a start signal.

Suitably, the start signal is a start sequence from an apparatus connected to the battery cell.

Suitably, the switchable element comprises a transistor or dual MOSFET transistors.

In a second aspect the invention provides an apparatus adapted to be powered by a battery cell connected to a device for preserving battery capacity as mentioned above.

According to the invention, the apparatus is adapted to send a start signal to the disconnection control means in order to command the switchable element to connect all circuits including the safety circuit.

In one embodiment, it is adapted to send the start signal by when receiving an input command from a user.

Suitably, it is adapted to send the start signal when the apparatus is switched on.

Suitably, it is also adapted to send the start signal when the apparatus is connected to a battery charging unit.

The apparatus may be a battery pack checking unit, a portable telephone, a pager, a communicator, a smart phone or an electronic organiser.

In a third aspect the invention provides an apparatus adapted to be connected to a device for preserving battery capacity as mentioned above.

According to the invention, the apparatus is adapted to send a disconnection signal to the disconnection control means in order to command the switchable element to disconnect all circuits including the safety circuit.

The apparatus may be a battery pack checking unit, a portable telephone, a pager, a communicator, a smart phone or an electronic organiser.

In a fourth aspect the invention provides a battery pack comprising a battery cell and a device for preserving battery capacity as mentioned above.

The battery pack may further comprise communication circuits, e.g. a communication ASIC.

### Brief description of the drawings

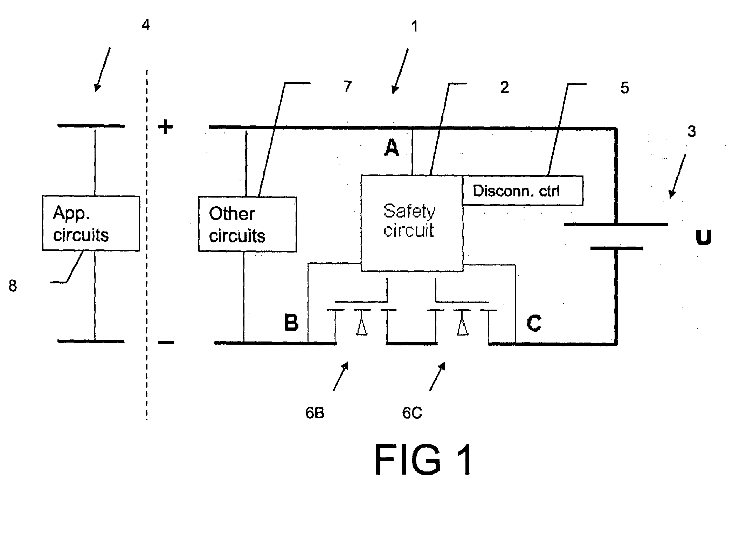

The invention will be described in detail below with reference to the accompanying drawing, in which the only figure 1 is a block diagram of a device implementing the invention and connected to an apparatus.

### Detailed description of preferred embodiments

As mentioned in the introduction, a battery pack for portable devices, such as portable telephones, pagers, communicators, smart phones, electronic organisers and the like, usually comprises electronic circuits in addition to the battery cell itself. Figure 1 illustrates a block diagram of a battery pack 1 suitable for connection to an apparatus 4. The poles of the battery pack 1 are to the right of the dashed line, while the apparatus 4 with its circuits 8 are to the left.

Conventionally the battery pack comprises a safety circuit 2. Lithium-Ion/Lithium-Polymer cells are sensitive for overcharging and also should not be overdischarged. The purpose of the safety circuit 2 is to protect the battery cell and to some extent an apparatus connected to the battery pack. The safety circuit 2 comprises voltage and current detectors and could also incorporate circuits for calculating the remaining capacity/energy content of the battery. During conventional operation, the safety circuit detects over/undervoltage between the voltage points A-C, detects high current between points B-C and detects short circuits between points A-B. The safety circuit 2 usually comprises dual MOSFET transistors 6B and 6C to switch off the battery cell 3 from the apparatus 4.

Overvoltage is when the detected voltage U increases over a predetermined overcharge (OCH) limit over which the battery cell could be damaged, that is U > U_{OCH}, the value U_{OCH} being set by the manufacturer. Undervoltage is set at another voltage U_{z} (Z for zero capacity left) corresponding to when the battery cell has an output voltage U which is just able to power the apparatus but if more capacity is drawn from the battery cell the voltage will be too low. Thus the safety circuit 2 switches off the apparatus when U < U_{z}. U_{z} could for instance be at approximately 3 V or 70% of the maximum voltage in a mobile telephone. In an alternative, the remaining capacity E is measured instead of the voltage. Similarly, the safety circuit 2 switches off the apparatus when E < E_{z}. E_{z} could for instance be at approximately 20 % of the total maximum capacity of the battery cell.

As is known within the art, there is a non-linear relationship between the voltage and the capacity/energy content of a battery cell. This relationship is also dependent of the specific chemistry of the cell. Thus, all the percentages mentioned should only be regarded as non-limiting examples.

As mentioned in the introduction, the safety circuit 2 consumes power from the battery cell. Even if the current consumption is very low e.g. in the same order as the internal discharge current of the battery cell, this has an impact on the shelf life of the battery pack. The present inventors have realised that it would be suitable to switch off also the safety circuit when the battery pack is stored. The other circuits 7, such as communication ASIC etc, are not harmed by being cut off from the battery cell. Suitably, the MOSFET transistors 6B and 6C of the safety circuit 2 are used for switching off the current from the battery cell 3.

To this end a disconnection control means 5 is connected to or integrated with the safety circuit 2. The disconnection control means controls the switchable element of the safety circuit to switch off the battery cell. The disconnection control means basically has three operation modes or functions: a manual function in which the disconnection control means 5 is simply receiving a command to switch off, a first automatic mode in which the time from disconnection of the battery is measured and controlling when the switch off is made, and a second automatic mode when a battery parameter is detected which triggers the switch off.

In the manual mode the disconnection control means receives a signal commanding the disconnection control means to switch off the battery cell 3 by means of the switchable elements 6B and 6B. This is useful for example when performing a final check in a battery pack checking unit during manufacturing of the battery pack. Thus, before storing the battery pack for an indeterminate time all circuits are switched off. Also the apparatus with which the battery pack normally is used may be provided with a feature enabling switching off of the battery. This is useful when the user intends to remove the battery pack for storing or when he knows that he will not be using the apparatus for some time.

Preferably, the battery preserving device is also provided with automatic modes which do not rely on the user to activate the battery preserving function. In one mode, the disconnection control means 5 comprises an activity detection means, which detects when the battery pack is not connected to the apparatus 4. For instance, the activity detection means could detect an activity signal from the apparatus. In one embodiment there is a timer circuit measuring the time t elapsed since the battery was disconnected from the apparatus. When the elapsed time t is greater than a limit tₘₐₓ the disconnection is performed- tₘₐₓ is suitably predefined based upon the application, and could for example be one hour, 24 hours, a week etc.

In another embodiment, just a flag is set when the activity detection means detects that the battery pack is disconnected from the apparatus. In this embodiment, the disconnection means also comprises a detection means adapted to sense a parameter of the battery cell 3, for instance the voltage U or the remaining capacity E (measured e.g. in mAh). Then the disconnection is effected when the detected voltage U of the battery cell decreases below a predetermined limit Uₚᵣₑₛₑᵣᵥₑ. In an alternative, the remaining capacity E of the battery cell is measured, and the disconnection is performed when the remaining capacity E falls below a predetermined limit Eₚᵣₑₛₑᵣᵥₑ. Uₚᵣₑₛₑᵣᵥₑ could for instance be at approximately 70 - 80% of the maximum voltage of the battery cell when fully charged. Eₚᵣₑₛₑᵣᵥₑ could for instance be at approximately 10 - 40% of the maximum capacity of the battery cell when fully charged.

In one embodiment, the disconnection control means 5 is adapted to switch off the current consumption when a measured parameter, the voltage U or capacity E, falls below a predetermined limit U_{low}/E_{low}. This operation mode could operate independently of whether the battery pack is disconnected or not from the apparatus. However, normally in this case the battery pack is connected to the apparatus 4 and the limits U_{low} and E_{low}, respectively, are set lower than the limit U_{z}/E_{z} at which the safety switch disconnects the apparatus. For instance if U_{z} is set at 70% of the total maximum voltage the limit U_{low} is set at 60% of the total maximum voltage. For instance if E_{z} is set at 20% of the total maximum capacity the limit E_{low} is set at 10 - 20% of the total maximum capacity.

If the limits U_{low}/E_{low}, U_{z}/E_{z} and Uₚᵣₑₛₑᵣᵥₑ/Eₚᵣₑₛₑᵣᵥₑ are used together U_{low}/E_{low} < U_{z}/E_{z} < Uₚᵣₑₛₑᵣᵥₑ/E_{preserve.}

The present invention may be implemented in a battery preserving device as such, together with or separate from a conventional safety circuit. The invention also involves a battery pack incorporating such a battery preserving device.

The invention also involves an apparatus adapted to co-operate with such a battery preserving device e.g. a mobile telephone or a battery pack checking unit.

The apparatus is adapted to send a disconnection signal to the disconnection control means in order to command the switchable element to disconnect all circuits including the safety circuit. For instance the so called battery removal detection signal could be used to switch off the battery pack. The user or operator may command a disconnection by entering a command on the apparatus. This could for example be when the user intends to remove the battery pack for storing or when he knows that he will not be using the apparatus for some time, or when performing a final check of the battery pack, as mentioned above.

Naturally, the apparatus should be able to switch the battery pack back on again, if the disconnection has been activated. Then the apparatus sends a start signal to the disconnection control means in order to command the switchable element to connect all circuits including the safety circuit. The start signal may be a start sequence from an apparatus connected to the battery pack. Suitably, the apparatus is adapted to send the start signal when the apparatus is switched on. This presupposes that the apparatus has some energy stored or is connected to another power source so that it is able to be switched on (despite being disconnected from the battery cell).

The apparatus may also be adapted to send the start signal when the apparatus is connected to a battery charging unit. For example, when a battery cell has low voltage, the user may want to charge it in the apparatus, and the disconnection must be deactivated.

A person skilled in the art will appreciate that the invention may be implemented by various combinations of hardware and software, all falling within the scope of the present invention as it is defined by the accompanying claims.

## Claims

1. A device for preserving battery capacity adapted to be connected to or integrated with a safety circuit (2) connected to output poles of a battery cell (3) and comprising a switchable element (6B, 6C) arranged to disconnect the battery cell (3), the battery cell (3) being suitable for connection to an apparatus (4), **characterised in that** the device further comprises a disconnection control means (5) adapted to command the switchable element (6B, 6C) to disconnect substantially all current consumption from the battery cell (3) including the safety circuit (2) when certain criteria are fulfilled.

2. A device according to claim 1, **characterised in that** the disconnection control means (5) is adapted to receive a disconnection signal commanding the disconnection control means (5) to command a disconnection.

3. A device according to claim 1 or 2, **characterised in that** the disconnection control means (5) further comprises an activity detection means adapted to detect if the battery cell (3) is connected to or disconnected from an apparatus (4).

4. A device according to claim 3, **characterised in that** the disconnection control means (5) further comprises a timing means adapted to measure the time t elapsed since the battery cell (3) was disconnected from the apparatus (4), wherein the disconnection control means (5) is adapted to command a disconnection when the time t elapsed is greater than a time limit tₘₐₓ (t>tₘₐₓ).

5. A device according to any one of the previous claims, **characterised in that** the disconnection control means (5) further comprises a detection means adapted to sense a parameter of the battery cell (3), wherein the disconnection control means (5) is adapted to command a disconnection when a logical expression involving the parameter fulfils a certain criterion.

6. A device according to any one of claims 3-5, **characterised in that** the parameter detection means comprises a voltage detection means adapted to sense the voltage U of the battery cell (3), wherein the disconnection control means (5) is adapted to command a disconnection when the battery cell (3) is disconnected from an apparatus (4) and the voltage U is less than a voltage preserve limit Uₚᵣₑₛₑᵣᵥₑ (U<Uₚᵣₑₛₑᵣᵥₑ).

7. A device according to claim 6, **characterised in that** Uₚᵣₑₛₑᵣᵥₑ is approximately 70 - 80% of the maximum battery cell voltage.

8. A device according to any one of claims 3-5, **characterised in that** the parameter detection means comprises a capacity detection means adapted to sense the remaining capacity E of the battery cell (3), wherein the disconnection control means (5) is adapted to command a disconnection when the battery cell (3) is disconnected from an apparatus (4) and the remaining capacity E is less than a capacity preserve limit Eₚᵣₑₛₑᵣᵥₑ (E<Eₚᵣₑₛₑᵣᵥₑ).

9. A device according to claim 8, **characterised in that** Eₚᵣₑₛₑᵣᵥₑ is approximately 10 - 40% of the maximum battery cell capacity.

10. A device according to claim 5, **characterised in that** the parameter detection means comprises a voltage detection means adapted to sense the voltage U of the battery cell (3), wherein the disconnection control means is adapted to command a disconnection when the voltage U is less than a low voltage limit U_{low} (U<U_{low}).

11. A device according to claim 10, **characterised in that** the safety circuit is arranged to switch off an apparatus (4) connected to the battery cell (3) when the voltage U of the battery cell (3) is lower than a limit U_{z}, and **in that** U_{low} is lower than said voltage limit U_{z}.

12. A device according to claim 11 or 12, **characterised in that** U_{low} is approximately 60% of the maximum battery cell voltage.

13. A device according to claim 5, **characterised in that** the parameter detection means comprises a capacity detection means adapted to sense the remaining capacity E of the battery cell (3), wherein the disconnection control means (5) is adapted to command a disconnection when the remaining capacity E is less than a capacity limit E_{low} (E<E_{low}).

14. A device according to claim 13, **characterised in that** the safety circuit is arranged to switch off an apparatus (4) connected to the battery cell (3) when the remaining capacity E of the battery cell (3) is lower than a limit E_{z}, and **in that** E_{low} is lower than said capacity limit E_{z}.

15. A device according to claim 13 or 14, **characterised in that** E_{low} is approximately 10% of the maximum battery cell capacity.

16. A device according to any one of the previous claims, **characterised in that** the disconnection control means (5) is adapted to command the switchable element (6B, 6C) to connect all circuits including the safety circuit (2) upon reception of a start signal.

17. A device according to claim 16, **characterised in that** the start signal is a start sequence from an apparatus (4) connected to the battery cell (3).

18. A device according to any one of the previous claims, **characterised in that** the switchable element comprises a transistor (6B, 6C).

19. A device according to claim 18, **characterised in that** the switchable element comprises dual MOSFET transistors (6B, 6C).

20. An apparatus (4) adapted to be powered by a battery cell (3) connected to a device for preserving battery capacity in accordance with any one of the previous claims, **characterised in that** the apparatus (4) is adapted to send a start signal to the disconnection control means (5) in order to command the switchable element (6B, 6C) to connect all circuits including the safety circuit (2).

21. An apparatus according to claim 20, **characterised in that** it is adapted to send the start signal by when receiving an input command from a user.

22. An apparatus according to claim 20 or 21, **characterised in that** it is adapted to send the start signal when the apparatus (4) is switched on.

23. An apparatus according to claim 20, 21 or 22, **characterised in that** it is adapted to send the start signal when the apparatus (4) is connected to a battery charging unit.

24. An apparatus according to any one of claims 20 to 24, **characterised in that** the apparatus (4) is a battery pack checking unit, a portable telephone, a pager, a communicator, a smart phone or an electronic organiser.

25. An apparatus (4) adapted to be connected to a device for preserving battery capacity in accordance with any one of claims 1 to 19, **characterised in that** it is adapted to send a disconnection signal to the disconnection control means (5) in order to command the switchable element (6B, 6C) to disconnect all circuits including the safety circuit (2).

26. An apparatus according to claim 19, **characterised in that** the apparatus (4) is a battery pack checking unit, a portable telephone, a pager, a communicator, a smart phone or an electronic organiser.

27. A battery pack (1) comprising a battery cell (3) and a device for preserving battery capacity in accordance with any one of claims 1 to 19.

28. A battery pack according to claim 27, **characterised in that** it further comprises communication circuits (7), e.g. a communication ASIC.
